# EUROPEAN PATENT APPLICATION

(11) **EP 4 641 830 A1**
(43) Date of publication of application: **29.10.2025**
(21) Application number: 23914951.1
(22) Date of filing: 27.11.2023
(51) Int. Cl.: H01Q 1/32, H01Q 3/36, H01Q 1/38

(54) **VEHICLE ANTENNA DEVICE AND METHOD FOR OPERATING SAME**

(30) Priority: 06.01.2023 KR 20230002507
(71) Applicant: Samsung Electronics Co., Ltd., Suwon-si, Gyeonggi-do 16677 (KR)
(72) Inventor: SEOL, Dongbeom, Suwon-si, Gyeonggi-do 16677 (KR)
(74) Representative: Gulde & Partner
(86) International application number: PCT/KR2023/019263
(87) International publication number: WO 2024/147488

(57) **Abstract**

Provided are a vehicle antenna device and an operating method thereof. The vehicle antenna device includes a plurality of antennas arranged to have 360° coverage, a plurality of phase shifters electrically connected to the plurality of antennas in a one-to-one correspondence and each configured to control a phase of a wireless signal transmitted through a corresponding antenna, and a processor configured to control at least some of the plurality of phase shifters so that wireless signals of a same phase are transmitted through at least two antennas among the plurality of antennas based on signal gains of wireless signals received through the plurality of antennas.

## Description

### Technical Field

Disclosed embodiments relate to a vehicle antenna device and an operating method thereof.

### Background Art

Recently, provision of various communication services and multimedia services to vehicles has increased. With the development of autonomous vehicles, there is an increasing need for communication technology that enables continuous communication with roadside infrastructure and vehicles as well as exchange or sharing of information about traffic conditions. Accordingly, multiple-input multiple-output (MIMO) communication technology for seamlessly supporting a large amount of information has been applied to vehicles, and the number of antennas that need to be mounted on a vehicle has increased significantly compared to the prior art.

A vehicle may use antennas to transmit and/or receive a radio frequency (RF) signal including a voice signal or data (e.g., a message, a photograph, a video, a music file, or a game). For example, a vehicle may perform communication by using a high frequency (e.g., 5^{th} generation (5G) millimeter wave (mmWave)).

The mmWave frequency has problems such as a narrow communication area due to a short propagation distance and radio interference/blocking due to obstacles.

### Disclosure of Invention

### Technical Problem

A disclosed embodiment provides a vehicle antenna device having omnidirectional coverage and an operating method of the vehicle antenna device.

A disclosed embodiment provides a vehicle antenna device in which antennas capable of transmitting and receiving wireless signals of the same phase may be grouped according to a signal gain, and an operating method of the vehicle antenna device.

### Solution to Problem

A vehicle antenna device according to a disclosed embodiment includes: a printed circuit board; a plurality of antennas disposed on the printed circuit board and arranged to have 360° coverage; a plurality of phase shifters electrically connected to the plurality of antennas in a one-to-one correspondence and each configured to control a phase of a wireless signal transmitted through a corresponding antenna; and a processor configured to control at least some of the plurality of phase shifters so that wireless signals of a same phase are transmitted through at least two antennas among the plurality of antennas based on signal gains of wireless signals received through the plurality of antennas.

An operating method of a vehicle antenna device including a plurality of antennas arranged to have 360° coverage according to a disclosed embodiment includes: calculating a signal gain of a wireless signal received through each of the plurality of antennas; and transmitting wireless signals of a same phase through at least two antennas among the plurality of antennas based on the signal gain of the wireless signal.

### Advantageous Effects of Invention

A vehicle antenna device and an operating method thereof according to the present disclosure may have 360° coverage.

A vehicle antenna device and an operating method thereof according to the present disclosure may adjust a propagation distance of a wireless signal by adjusting the number of antennas capable of transmitting and receiving wireless signals of the same phase according to a signal gain.

A vehicle antenna device according to the present disclosure may include a flexible area to be appropriately disposed in a vehicle.

However, effects of the disclosure are not limited thereto.

### Brief Description of Drawings

FIG. 1 is a view illustrating a vehicle on which an antenna device is installed, according to a disclosed embodiment.
FIG. 2 is a block diagram illustrating an antenna device, according to an embodiment.
FIG. 3A is a top plan view illustrating an antenna device, according to an embodiment.
FIG. 3B is a bottom plan view illustrating the antenna device of FIG. 3A.
FIG. 3C is a cross-sectional view illustrating the antenna device of FIG. 3A.
FIG. 4A is a view illustrating an antenna device 201 in which an antenna and a phase shifter overlap each other, according to an embodiment.
FIG. 4B is a view illustrating an antenna device including a phase shifter as a component of a radio frequency integrated circuit (RFIC), according to an embodiment.
FIG. 4C is a view illustrating an antenna device including a processor in which a phase shifter is embedded, according to an embodiment.
FIG. 4D is a view illustrating an antenna device, according to another embodiment.
FIG. 5 is a flowchart for describing a method of performing wireless communication by using a plurality of antennas, according to an embodiment.
FIG. 6 is a reference view for describing a method by which each of a plurality of antennas performs wireless communication, according to an embodiment.
FIG. 7 is a flowchart for describing a method of performing wireless communication by grouping two or more antennas among a plurality of antennas, according to an embodiment.
FIGS. 8A and 8B are reference views for describing a method of performing first set wireless communication by grouping two antennas, according to an embodiment.
FIG. 8B is a reference view for describing a method of performing second set wireless communication by grouping two antennas, according to an embodiment.
FIG. 9A is a reference view for describing a method of performing first set wireless communication by grouping three antennas, according to an embodiment.
FIG. 9B is a reference view for describing a method of performing second set wireless communication by grouping three antennas, according to an embodiment.
FIG. 9C is a reference view for describing a method of performing third set wireless communication by grouping three antennas, according to an embodiment.
FIG. 10A is a view illustrating an antenna device including a rigid flexible printed circuit board (RFPCB), according to an embodiment.
FIG. 10B is a view illustrating an antenna device further including an actuator for adjusting a degree of inclination of an antenna, according to an embodiment.
FIG. 11A is a view illustrating an example of a state where an antenna device is disposed in a vehicle, according to an embodiment.
FIG. 11B is a view illustrating an example of a state where an antenna device is disposed in a vehicle, according to an embodiment.
FIG. 11C is a view illustrating an example of a state where an antenna device is disposed in a vehicle, according to an embodiment.
FIG. 11D is a view illustrating an example of a state where an antenna device is disposed in a vehicle, according to an embodiment.
FIG. 12 is a block diagram illustrating a vehicle electronic device including an antenna device.
FIG. 13 is a flowchart for describing a method of controlling driving of a vehicle by using an antenna device, according to an embodiment.
FIG. 14 is a flowchart for describing a method of controlling an antenna device according to a communication state, according to an embodiment.

### Mode for the Invention

Embodiments of the present disclosure will now be described more fully with reference to the accompanying drawings for one of ordinary skill in the art to be able to perform the present disclosure without any difficulty. However, the present disclosure may be embodied in many different forms and is not limited to the embodiments set forth herein. For clarity, portions irrelevant to the descriptions of the present disclosure are omitted in the drawings, and like components are denoted by like reference numerals throughout the specification.

Throughout the specification, when a component is referred to as being "connected" to another component, it will be understood to include that the component is "directly connected" to the other component or is "electrically connected" to the other component with another component therebetween. When a part "includes" an element, another element may be further included, rather than excluding the existence of the other element, unless otherwise described.

The expressions "in some embodiments", "in an embodiment" and the like appearing in various parts of the specification are not necessarily referring to the same embodiment of the specification.

Some embodiments may be represented by functional block components and various process operations. Some or all of functional blocks may be implemented by various numbers of hardware and/or software configurations for performing certain functions. For example, functional blocks of the present disclosure may be implemented by using one or more processors or microprocessors, or circuit elements for intended functions. Furthermore, for example, the functional blocks may be implemented in various programing or scripting languages. The functional blocks may be implemented in an algorithm executed by one or more processors. In addition, the present disclosure may employ related-art techniques for electronic configuration, signal processing, and/or data processing, etc. Terms such as 'module', 'component', and the like may be used broadly and may not be limited to mechanical and physical elements.

Also, connection lines or connection members between components illustrated in the drawings are merely illustrative of functional connections and/or physical or circuit connections. In an actual device, connections between components may be represented by various functional connections, physical connections, or circuit connections that are replaceable or added.

In addition, the expression 'at least one of a, b, and c' indicates only a, only b, only c, both a and b, both a and c, both b and c, or all of a, b, and c.

A vehicle 100 and a vehicle antenna device 200 according to a disclosed embodiment will be described in detail with reference to the attached drawings. In the attached drawings, the same elements are denoted by the same reference numerals. Also, throughout the detailed description, the same elements are described with the same terms.

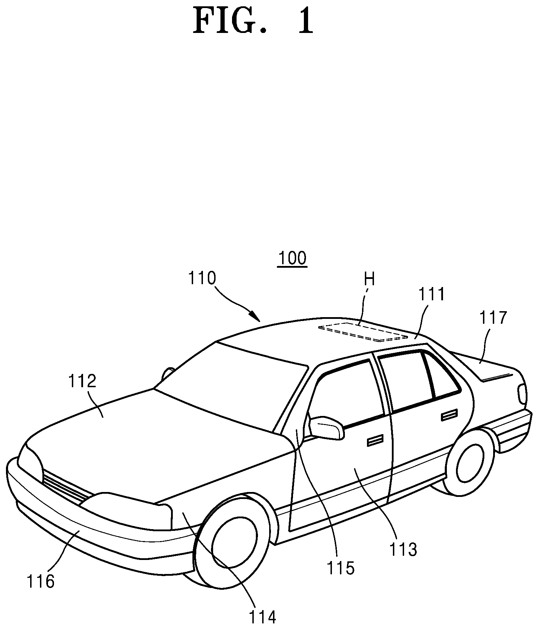

FIG. 1 is a view illustrating the vehicle 100 on which the antenna device 200 is installed, according to a disclosed embodiment.

The vehicle antenna device 200 according to a disclosed embodiment may be disposed outside or inside the vehicle 100.

In detail, the vehicle antenna device 200 may be installed in a shark fin module located on the glass or roof outside the vehicle 100.

Alternatively, the vehicle antenna device 200 according to a disclosed embodiment may be provided inside a main body of the vehicle 100. Assuming that an antenna 210 is provided in the glass of the vehicle 100, when the glass is damaged due to external impact, the antenna 210 may also be damaged, and a length of a cable connecting the antenna 210 to a printed circuit board (PCB) 240 may be increased. Also, when two or more antennas 210 are provided or mounted on the glass to support diversity, there may be an isolation issue between the antennas 210. Also, because the shark fin module has a shape exposed to the outside of the vehicle 100, there is also a risk of damage due to external impact. Also, due to a small size of the shark fin module, a size of the antenna 210 is reduced and a radiation capability (or broadcast reception capability) of the antenna 210 may be degraded, and when multiple antennas 210 should be provided to receive various signals, the number of shark fin modules may increase. When the vehicle antenna device 200 is provided in the main body of the vehicle 100, the antennas 210 are not exposed to the outside of the vehicle 100 unlike the antennas 210 provided in the glass or the shark fin module. Accordingly, the risk of damage may be reduced, and the appearance of the vehicle 100 may not be damaged.

Referring to FIG. 1, the antenna device 200 (not shown) may be installed in an area H of a panel 110 that forms an outer shape of the vehicle 100. For example, the area 11 of the upper panel 150 may be opened so that the antenna device 200 (not shown) coupled to the upper panel 110 is disposed. Also, the area H may be an opening of the upper panel 110.

Also, although the antenna device 200 is installed in one area H of an upper portion of the vehicle 100 in FIG. 1, the antenna device 200 may be installed anywhere inside or outside the vehicle 100.

For example, the antenna device 200 (not shown) may be installed in a lower area or an inner area of at least one of a bonnet panel 112, a door panel 113, a fender panel 114, a pillar panel 115, a bumper panel 116, and a trunk panel 117 of the vehicle.

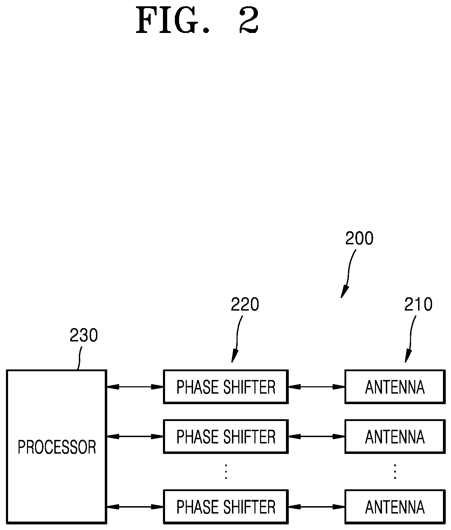

FIG. 2 is a block diagram illustrating the antenna device 200, according to an embodiment.

The antenna device 200 may transmit or receive a signal to or from an external device through a wireless network. The antenna device 200 may transmit and receive a high-frequency broadband signal. For example, the antenna device 200 may transmit and receive a signal of a higher frequency than a 4^{th} generation (4G) network. The antenna device 200 may transmit and receive a wireless signal of a millimeter wave (hereinafter, referred to as 'mmWave') band, for example, a 5^{th} generation (5G) signal. The 5G signal may be, for example, a signal of a band of about 28 GHz.

The antenna device 200 may include a plurality of antennas 210 that may be used for beamforming, a plurality of phase shifters 220 respectively corresponding to the plurality of antennas 210 and configured to change a phase of a wireless signal transmitted and received from each antenna 210, and a processor 230 configured to control each phase shifter 220 to adjust a phase of a wireless signal transmitted and received through each antenna 210.

The plurality of antennas 210 may be arranged to have omnidirectional coverage, for example, 360° coverage. For example, the plurality of antennas 210 may be arranged in a ring shape on a printed circuit board described below.

At least one of the plurality of antennas 210 may include a tapered slot antenna. The tapered slot antenna is an end-fire antenna and may have a wide bandwidth. The plurality of antennas 210 may be, but are not limited to, tapered slot antennas having the same shape and size. At least one of a shape and a size may be different according to an arrangement position. The antenna device 200 may adjust a direction of a main beam by using phases of wireless signals transmitted through the plurality of antennas 210, and may transmit and receive wireless signals in all directions.

The phase shifter 220 may change a phase of a wireless signal transmitted and received by a corresponding antenna 210. During transmission, each of the plurality of phase shifters 220 may change a phase of a wireless signal to be transmitted to the outside (e.g., a base station of a 5G network) of the vehicle through a corresponding antenna 210. During reception, each of the plurality of phase shifters 220 may change a wireless signal received from the outside through a corresponding antenna into the same or substantially the same phase. Accordingly, a wireless signal may be transmitted and received between the vehicle and the outside.

The processor 230 may feed the plurality of antennas 210 while controlling the plurality of phase shifters 220 to transmit and receive wireless signals through the plurality of antennas 210.

The processor 230 may include a radio frequency integrated circuit (hereinafter, referred to as 'RFIC') configured to process a wireless signal and transmit or receive a wireless signal to or from an external device (e.g., a base station). However, the present disclosure is not limited thereto. The processor 230 may further include at least one of a modem and an inter frequency integrated circuit (hereinafter, referred to as 'IFIC').

The modem may support a signal of an mmWave band. For example, the modem may support next-generation communication including 5G communication. The modem may include a communication processor 230. The communication processor 230 may support establishment of a communication channel of a band to be used for wireless communication and legacy network communication through the established communication channel. The network 294 may be a 5G network defined in the 3GPP.

The IFIC may transmit a signal received from the modem to the RFIC, or may transmit a signal received from the RFIC to the modem. For example, the IFIC may be disposed between the modem and the RFIC. The IFIC may process an IF signal. The IF signal may be, for example, a signal of a band of about 7 to 11 GHz.

The processor 230 may calculate a signal gain of a wireless signal received from each of the antennas 210. A signal gain refers to a ratio of the strength of a received wireless signal to the strength of a wireless signal transmitted through the antenna 210, and various methods of calculating a signal gain applied in the art may be applied. For example, the signal gain may be based on SNR, received signal strength indication (RSSI), carrier to interference and noise ratio (CINR), signal to interference ratio (CIR), reference signal received power (RSRP), or reference signal received quality (RSRQ).

The processor 230 may adjust the phase shifters 220 to adjust phases of wireless signals of the antennas 210 based on signal gains. For example, when the antennas 210 transmit and receive wireless signals of different phases, the processor 230 determines whether a signal gain of a wireless signal received through each antenna 210 is greater than or equal to a reference value.

The processor 230 may control at least some of the plurality of phase shifters 220 to transmit wireless signals of the same phase through at least two antennas 210 among the plurality of antennas 210 based on the number of antennas 210 whose signal gain is greater than or equal to the reference value.

For example, when the number of antennas 210 whose signal gain is greater than or equal to the reference value is greater than or equal to a reference number, the processor 230 may control the antennas 210 to transmit wireless signals of different phases. When the number of antennas 210 whose signal gain is greater than or equal to the reference value is less than the reference number, the processor 230 may group two or more antennas 210 among the plurality of antennas 210 and may control the phase shifters 220 corresponding to the grouped antennas so that the grouped antennas transmit wireless signals of the same phase. The grouped antennas may be antennas 210 continuously arranged among the plurality of antennas 210. The reference value and the reference number may be adjusted by a communication environment, a designer, etc.

When the antennas 210 continuously arranged transmit wireless signals of the same phase, the wireless signals may be transmitted over a greater distance due to overlapping Accordingly, the antenna device 200 may transmit and receive a wireless signal with an improved signal gain.

The antenna device 200 illustrated in FIG. 2 may be installed in an area inside or outside the vehicle. The antenna device 200 may be integrally formed with another antenna device (not shown). Here, the antenna device (not shown) may be referred to as a telematics control unit (TCU). The TCU is a component for controlling data transmission/reception through wireless communication in the device and may be responsible for communication with an external electronic device (e.g., a server or a mobile device).

The processor 230 performs operations according to a disclosed embodiment by executing at least one instruction. That is, the processor 230 may control an intended operation to be performed by executing the at least one instruction.

For example, the processor 230 may obtain information from an external device by adjusting a phase of at least one wireless signal output from the antenna device 200. The processor 230 may control driving of the vehicle 100 based on the obtained information. In addition, the processor 230 may control the plurality of antennas 210 and the plurality of phase shifters 220 to output a specific beam based on driving information of the vehicle 100.

The processor 230 may include an internal memory (not shown) and at least one processor (not shown) for executing at least one stored program. The internal memory (not shown) of the processor 230 may store one or more instructions. The processor 230 may perform a certain operation by executing at least one of the one or more instructions stored in the internal memory (not shown).

For example, the processor 230 may include random-access memory (RAM) (not shown) used to store a signal or data input from the outside or used as a storage area corresponding to various operations performed by the antenna device 200, read-only memory (ROM) (not shown) used to store a control program and/or a plurality of instructions for controlling the antenna device 200, and at least one processor 230 (not shown).

Alternatively, the processor 230 may be implemented as a system on chip (SoC) in which a core (not shown) and a graphics processing unit (GPU) (not shown) are integrated. Alternatively, the processor 230 may include a multi-core over a single core. For example, the processor 230 may include a dual core, a triple core, a quad core, a hexa core, an octa core, a deca core, a dodeca core, or a hexadecimal core.

The processor 230 may include components for implementing a hardware platform (e.g., an application processor (AP) and a memory) and components for implementing a software platform (e.g., an operating system (OS) program, automotive safety software for controlling a phase of an electromagnetic wave signal output from the antenna 210, and an application).

At least one of operations performed by the processor 230 may be performed by using artificial intelligence (AI) technology.

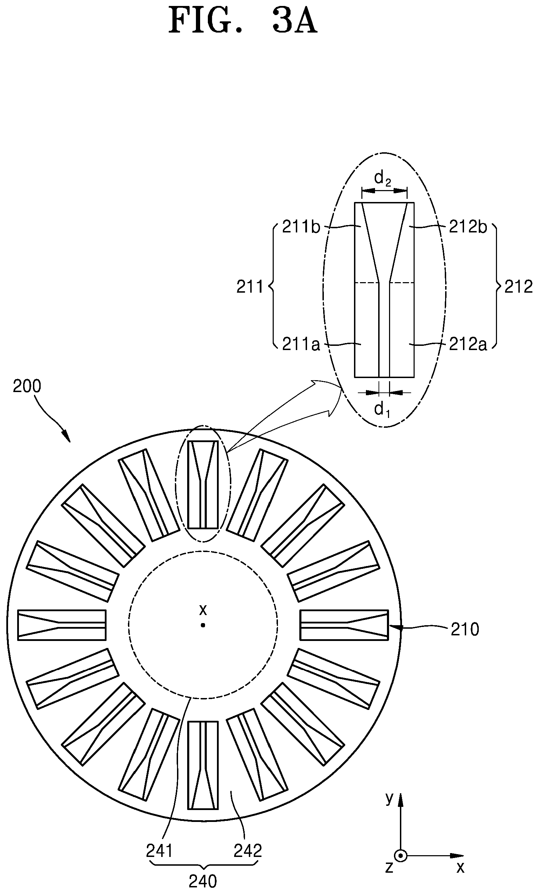

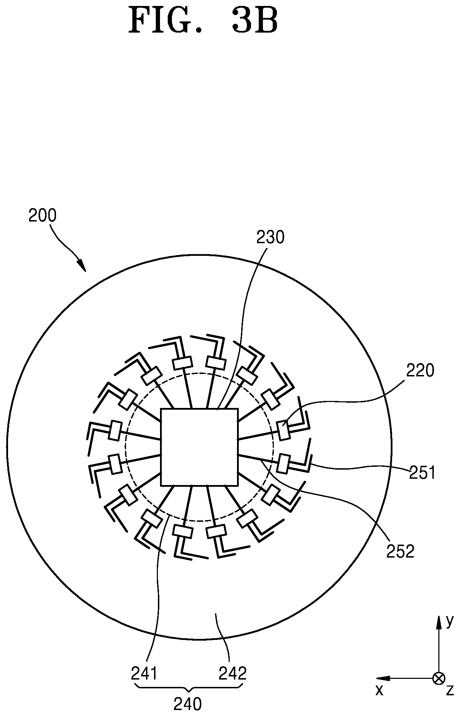

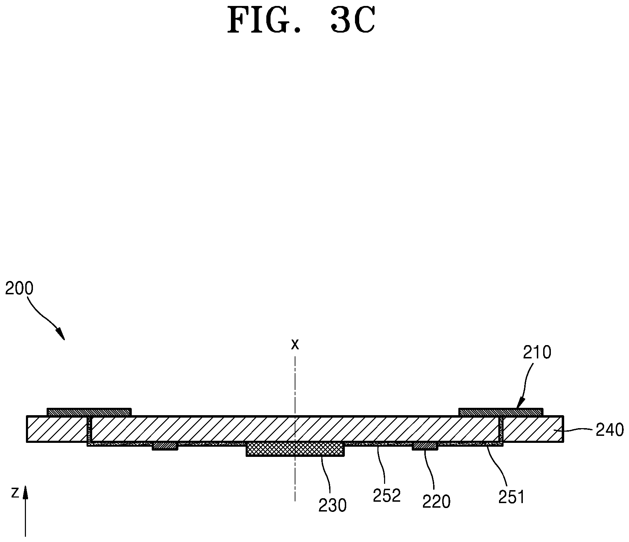

FIG. 3A is a top plan view illustrating the antenna device 200, according to an embodiment. FIG. 3B is a bottom plan view illustrating the antenna device 200 of FIG. 3A. FIG. 3C is a cross-sectional view illustrating the antenna device 200 of FIG. 3A.

Referring to FIGS. 3A to 3C, in an embodiment, the antenna device 200 may include the printed circuit board 240 (hereinafter, referred to as 'PCB 240').

The PCB 240 may include a plurality of conductive layers and a plurality of non-conductive layers alternately stacked with the conductive layers. The PCB 240 may provide electrical connection between various electronic components disposed inside and/or outside the PCB 240 by using wirings and conductive vias formed in the conductive layers. The PCB 240 may be a rigid PCB (RPCB) 240, a flexible PCB (FPCB) 240, or a rigid flexible PCB (RFPCB) 240.

The PCB 240 may include a center area 241 and an edge area 242 surrounding the center area 241. The plurality of antennas 210 may be disposed in the edge area 242 of the PCB 240, and the processor 230 may be disposed in the center area 241 of the PCB 240.

The plurality of antennas 210 may be formed on a first surface (e.g., a front surface) of the PCB 240. For example, the antenna 210 may be disposed in the edge area 242 of the first surface of the PCB 240. According to another embodiment, the plurality of antennas 210 may be formed inside the PCB 240.

The plurality of antennas 210 may be arranged so that the antenna device 200 has 360° coverage. For example, at least one of the plurality of antennas 210 may have a divergence angle greater than or equal to 360°/the number of the plurality of antennas 210.

The plurality of antennas 210 may be arranged in a ring shape with respect to a plurality of central axes X. The plurality of antennas 210 may be arranged at a certain interval from the central axis X of the plurality of antennas 210. The plurality of antennas 210 may be arranged to be rotationally symmetrical with respect to the central axis X. For example, when there are 16 antennas 210, the plurality of antennas 210 may be arranged at intervals of 22.5° with respect to the central axis X, and the plurality of antennas 210 may have a divergence angle of 22.5°. Accordingly, the 16 antennas 210 may transmit and receive beams in 360° directions.

At least one of the plurality of antennas 210 may be a tapered slot antenna. For example, the tapered slot antenna may include a first radiator 211 and a second radiator 212. The first radiator 211 and the second radiator 212 may be arranged to be symmetrical to each other. The first radiator 211 may include a first portion 211a having a constant width and a second portion 211b having a width that decreases away from the first portion 211a. The second radiator 212 may include a third portion 212a having a constant width and a fourth portion 212b having a width that decreases away from the third portion 212a. An interval between the first portion 211a of the first radiator 211 and the third portion 212a of the second radiator 212 may be constant, and an interval between the second portion 211b of the first radiator 211 and the fourth portion 212b of the second radiator 212 may increase toward an edge of the antenna 210.

The first radiator 211 of the antenna 210 may be electrically connected to a positive terminal (+) of an antenna feed. The second radiator 212 of the antenna 210 may be electrically connected to a negative terminal (-) of the antenna feed. In another example, the second radiator 212 may be electrically connected to the positive terminal (+) of the antenna feed, and the first radiator 211 may be electrically connected to the negative terminal (-) of the antenna feed. The first radiator 211 and the second radiator 212 of the antenna 2100 may be a feed line such as a CPW or a microstrip line.

An electric field may be formed between the first radiator 211 and the second radiator 212 of the antenna 210 so that a wireless signal is radiated from an upper end of a radiator structure. The tapered slot antenna has a wider bandwidth than a patch antenna or a dipole antenna.

Each of the plurality of phase shifters 220 may be disposed on the PCB 240 to be spaced apart from a corresponding antenna 210. The plurality of phase shifters 220 may be disposed on a second surface of the PCB 240. The plurality of phase shifters 220 may be disposed in the edge area 242 of the second surface of the PCB 240.

Each of the plurality of phase shifters 220 may be electrically connected to a corresponding antenna 210 through a connection wiring 250. A first connection wiring 251 may be electrically connected by a conductive line embedded in the PCB 240.

The processor 230 may be disposed on the PCB 240 to be spaced apart from the plurality of antennas 210. The processor 230 may be disposed on the second surface of the PCB 240. The processor 230 may be disposed in the center area 241 of the second surface of the PCB 240.

The processor 230 may be disposed at the same interval from each of the plurality of antennas 210. Here, the same may not only mean mathematically the same, but may also mean substantially the same within a typical error range, for example, 5%. The processor 230 and each of the plurality of antennas 210 and the plurality of phase shifters 220 may be electrically connected through a second connection wiring 252. The second connection wiring 252 may be a coaxial cable, a board-to-board connector, an interposer, or a flexible printed circuit board (FPCB).

The processor 230 may include a radio frequency integrated circuit (hereinafter, referred to as 'RFIC') that processes an RF signal and transmits or receives a signal of an RF band to or from an external device (e.g., a base station). However, the present disclosure is not limited thereto. The processor 230 may include at least one of a modem, an inter frequency integrated circuit (hereinafter, referred to as 'IFIC'), and an RFIC.

Although the phase shifter 220 does not overlap a corresponding antenna 210 in a thickness direction of the PCB 240 in the drawing, the present disclosure is not limited thereto. The phase shifter 220 may overlap the corresponding antenna 210 or may be embedded in the processor 230.

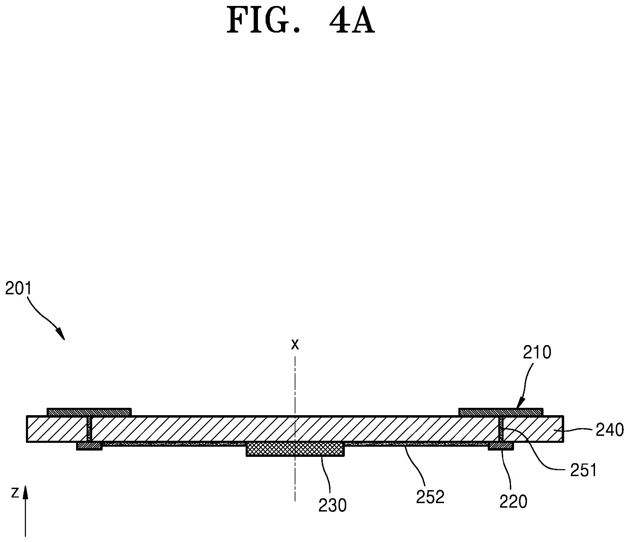

FIG. 4A is a view illustrating an antenna device 201 in which the antenna 210 and the phase shifter 220 overlap each other, according to an embodiment. As shown in FIG. 4A, the antenna 210 and the phase shifter 220 corresponding to the antenna 210 may overlap each other in the thickness direction of the PCB 240. Because the phase shifter 220 overlaps the antenna 210, the antenna device 201 may be implemented in a smaller size.

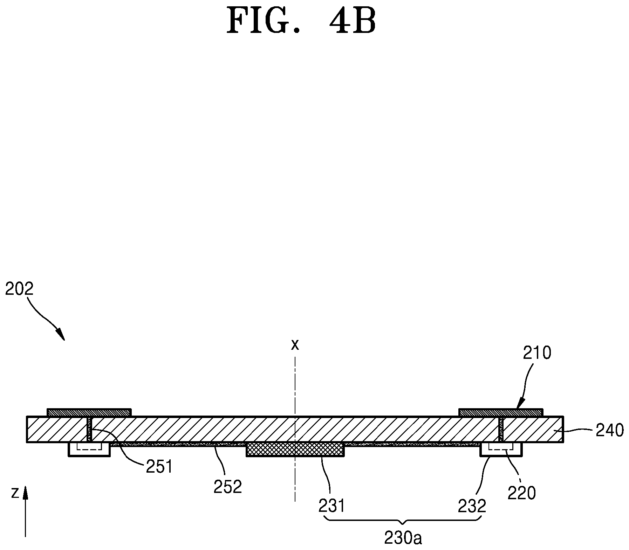

FIG. 4B is a view illustrating an antenna device 202 including the phase shifter 220 as a component of an RFIC, according to an embodiment. As shown in FIG. 4B, the antenna device 202 according to an embodiment may include a plurality of RFICs 232 for processing a wireless signal of each antenna 210. Also, the phase shifter 220 is embedded in each of the plurality of RFICs 232. Because each of the plurality of antennas 210 transmits and receives a wireless signal and the plurality of RFICs 232 respectively connected to the antennas 210 are provided, signal processing efficiency may be improved.

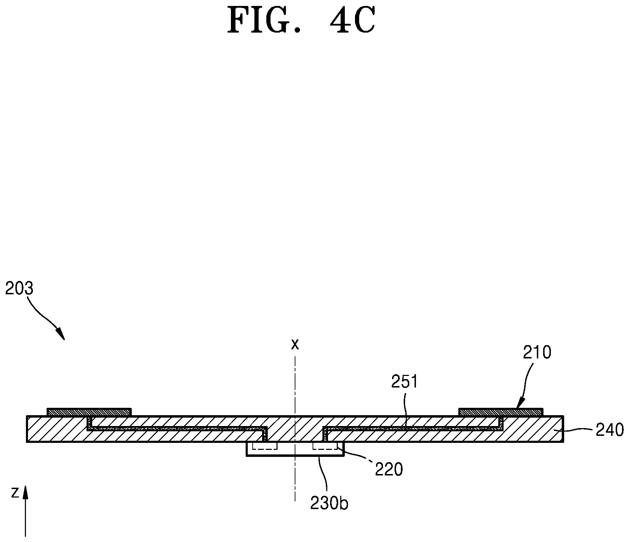

FIG. 4C is a view illustrating an antenna device 203 including a processor 230b in which the phase shifter 220 is embedded, according to an embodiment. As shown in FIG. 4C, the phase shifter 220 may be embedded in the processor 230b.

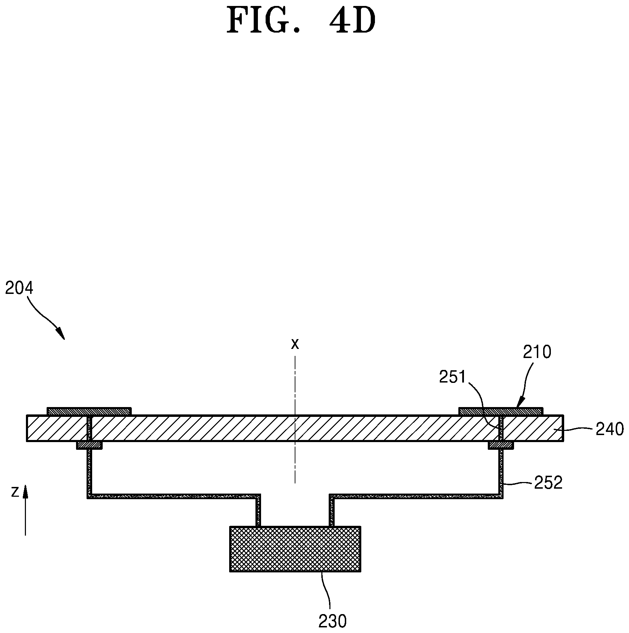

FIG. 4D is a view illustrating an antenna device 204, according to another embodiment. Comparing FIG. 3C to 4D, the processor 230 may not be disposed on the PCB 240. The processor 230 may be disposed on another printed circuit board, and each phase shifter 220 may be connected to the processor 230 through a second connection wiring 252b such as a coaxial cable.

The antennas 210 according to an embodiment may transmit and receive wireless signals of different phases, or the plurality of antennas 210 may be grouped and transmit and receive wireless signals of the same phase. When the plurality of antennas 210 are grouped to transmit and receive wireless signals of the same phase, a transmission distance increases. Accordingly, the processor 230 may adjust the number of antennas 210 for transmitting and receiving wireless signals of the same phase according to a signal gain.

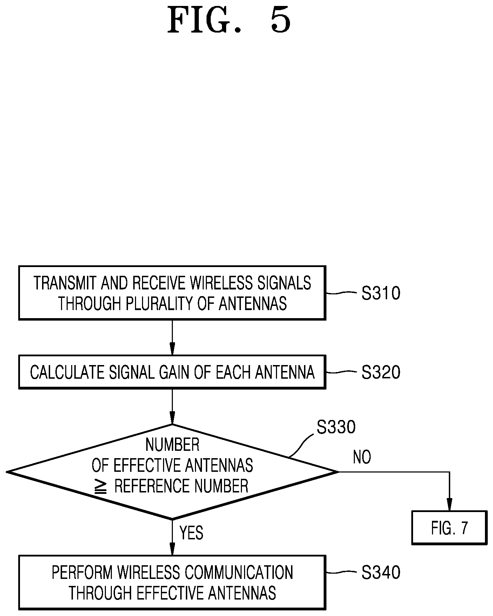

FIG. 5 is a flowchart for describing a method of performing wireless communication by using the plurality of antennas 210, according to an embodiment.

The processor 230 may transmit and receive wireless signals through the plurality of antennas 210 arranged to have 360° coverage (S310). The processor 230 may transmit and receive wireless signals with 360° coverage by sequentially feeding the plurality of antennas 210 one by one. However, the present disclosure is not limited thereto. The processor 230 may control the plurality of phase shifters 220 so that the plurality of antennas 210 transmit and receive wireless signals of different phases while simultaneously feeding the plurality of antennas 210.

The processor 230 may calculate a signal gain of a wireless signal received through each of the plurality of antennas 210. Various methods of calculating a signal gain applied in the art may be applied. For example, the signal gain may be based on SNR, received signal strength indication (RSSI), carrier to interference and noise ratio (CINR), signal to interference ratio (CIR), reference signal received power (RSRP), or reference signal received quality (RSRQ).

The processor 230 may determine whether the number of effective antennas is greater than or equal to a reference number (S330). The term "effective antenna" may refer to an antenna whose signal gain of a wireless signal is greater than or equal to a reference value. The reference value may be a minimum value for a signal gain of a wireless signal with which wireless communication may be effectively performed. The reference number is a minimum value for the number of antennas with which the antenna device 200 may effectively perform wireless communication, and may be 1 or more.

The processor 230 may control the effective antennas and the phase shifters 220 corresponding to the effective antennas so that wireless communication is performed through the effective antennas (S240).

When there is one antenna, that is, effective antenna whose signal gain is greater than or equal to the reference value, the processor 210 may transmit and receive a wireless signal, that is, perform communication, through the one effective antenna.

When there are a plurality of effective antennas, the processor 210 may control the effective antennas and the phase shifters 220 corresponding to the effective antennas so that wireless signals are transmitted and received by using at least some of the effective antennas. The processor 210 may control the effective antennas and the phase shifters 220 corresponding to the effective antennas so that wireless signals are transmitted and received by using all of the effective antennas. Alternatively, the processor 230 may determine an antenna to be communicated among the effective antennas based on at least one of a signal gain, an antenna that is previously communicated, and a driving state of the vehicle.

For example, the processor 230 may determine an antenna having a largest signal gain among the effective antennas as an antenna to be communicated. Alternatively, when an antenna that is previously communicated is included in the effective antennas, the processor 230 may determine the antenna that is previously communicated as an antenna to be communicated. Alternatively, when a driving speed of the vehicle is greater than or equal to a certain value, the processor 230 may determine an antenna at the front of the vehicle among the effective antennas as an antenna to be communicated, and when a driving speed of the vehicle is less than the certain value, the processor 230 may determine an antenna disposed at the side or rear of the vehicle among the effective antennas as an antenna to be communicated.

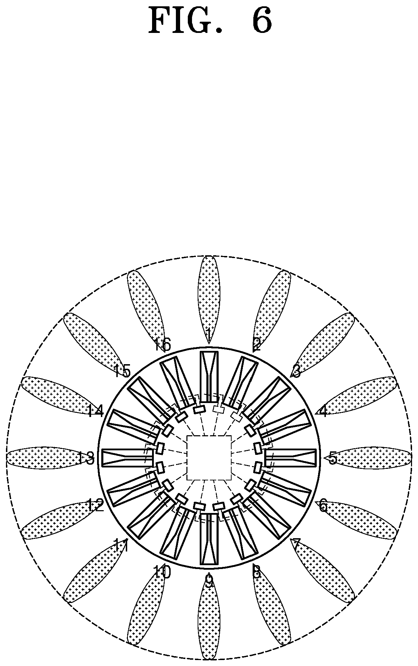

FIG. 6 is a reference view for describing a method by which each of the plurality of antennas 210 performs wireless communication, according to an embodiment. The processor 230 may control the plurality of phase shifters 220 so that wireless signals of different phases are transmitted and received through the plurality of antennas 210. The plurality of antennas 210 may be arranged to have 360° coverage. For example, the plurality of antennas 210 may be arranged in a ring shape. When the number of the plurality of antennas 210 is n (n is a natural number of 1 or more), the plurality of antennas 210 may be arranged at azimuthal intervals of 360°/n. At least one of the plurality of antennas 210 may have a divergence angle of 360°/n or more and 720°/n or less. Accordingly, the processor 230 may transmit and receive wireless signals in n or less different directions by using the n antennas 210.

Although the antennas 210 having the same shape are arranged in the drawing, the present disclosure is not limited thereto. The plurality of antennas 210 may have different sizes and shapes according to an application example. In the drawing, 16 antennas 210 are illustrated. The 16 antennas 210 may be arranged at azimuthal intervals of 22.5°. At least one of the plurality of antennas 210 may have a divergence angle of 22.5° or more and 50° or less.

The processor may perform wireless communication by using effective antennas among the plurality of antennas 210. The number of effective antennas may be less than or equal to a reference number. In this case, the processor 230 may determine that wireless communication may not be performed by using each of the plurality of antennas 210. Also, the processor 230 may group two or more antennas 210 among the plurality of antennas 210 and may transmit and receive wireless signals of the same phase through the grouped antennas.

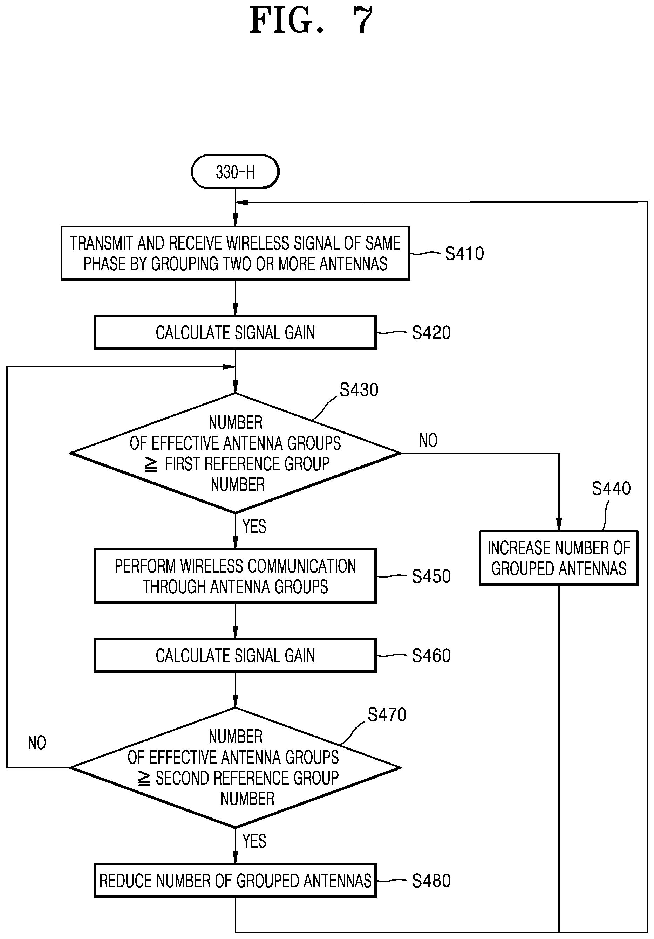

FIG. 7 is a flowchart for describing a method of performing wireless communication by grouping two or more antennas among the plurality of antennas 210, according to an embodiment.

When the number of effective antennas is less than the reference number (S330-N), the processor 230 may group two or more antennas 210 among the plurality of antennas 210 and may control the phase shifters 220 to transmit and receive wireless signals of the same phase through the grouped antennas (S410).

The processor 230 may calculate a signal gain of a wireless signal received through the grouped antennas (S420). A method of calculating a signal gain has been described above, and thus, a detailed description thereof will be omitted.

The processor 230 may determine whether the number of effective antenna groups is greater than or equal to a first reference group number (S430). The term 'effective antenna group' may refer to grouped antennas whose signal gain of a wireless signal is greater than or equal to a reference value. The reference value may be a minimum value for a signal gain of a wireless signal with which a wireless signal may be effectively transmitted and received. The first reference group number is a minimum number for the number of groups of grouped antennas with which wireless communication may be effectively performed, and may be 1 or more.

When the number of effective antenna groups is less than the first reference group number (S430-N), the processor 230 may increase the number of grouped antennas 210 (S440). The processor 230 may increase the number of grouped antennas 210 by one from the number of previously grouped antennas.

For example, the plurality of antennas 210 may be grouped in units of two antennas that are continuously arranged. When wireless signals are transmitted and received through grouped antennas but the number of effective antenna groups is less than the first reference group number, the processor 230 may determine that wireless communication may not be effectively performed. Accordingly, the processor 230 may increase the number of grouped antennas 210. For example, the processor 230 may group the plurality of antennas 210 in units of three antennas 210 that are continuously arranged.

When the number of effective antenna groups is greater than or equal to the first reference group number (S430-Y), the processor 230 may perform wireless communication through the grouped antennas (S450). That is, the processor 230 may control the plurality of antennas 210 and the plurality of phase shifters 220 so that wireless signals of the same phase are transmitted and received through the antennas 210 belonging to the same group and wireless signals of different phases are transmitted and received through the antennas 210 belonging to different groups.

The processor 230 may calculate a signal gain of a wireless signal received through the grouped antennas (S460). A method of calculating a signal gain has been described above, and thus, a detailed description thereof will be omitted.

Also, the processor 230 may determine whether the number of effective antenna groups is greater than or equal to a second reference group number (S470). The second reference group number may be greater than the first reference group number. For example, when even the number of effective antenna groups is 3 but the antenna device 200 may effectively perform wireless communication, the number of effective antenna groups may be 3. However, when the number of effective antenna groups is 6, a signal processing load may occur when performing wireless communication. Accordingly, it may be acceptable to reduce the number of grouped antennas. That is, when there is no need to perform wireless communication by increasing a propagation distance, the processor may reduce the number of grouped antennas.

When the number of effective antenna groups is greater than or equal to the first reference group number and less than the second reference group number (S430-Y and S470-N), the processor 230 may perform wireless communication through the original grouped antennas (S450).

When the number of effective antenna groups is greater than or equal to the second reference group number, the processor 230 may reduce the number of grouped antennas 210 (S480). The number of grouped antennas 210 may be reduced by one from the number of previously grouped antennas. For example, the plurality of antennas 210 may be grouped in units of three antennas 210 that are continuously arranged, and wireless communication may be performed through the grouped antennas. When the number of effective antenna groups is greater than or equal to the second reference group number, the processor 230 may reduce the number of antennas and may regroup the plurality of antennas 210 in units of two antennas 210 that are continuously arranged.

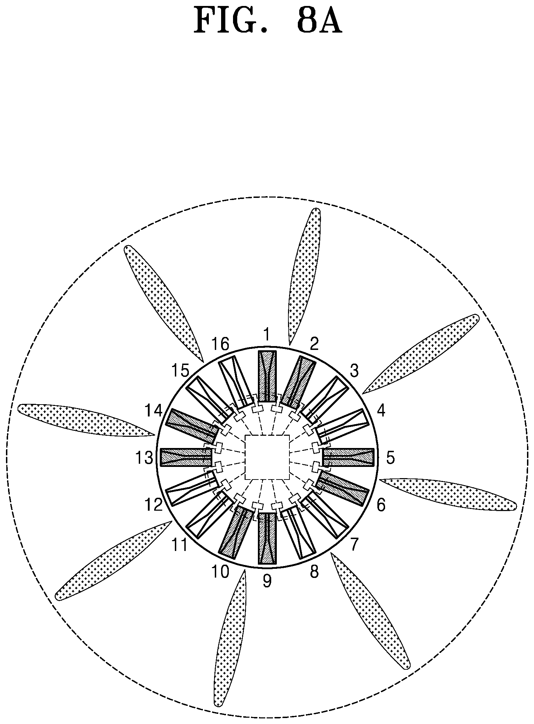

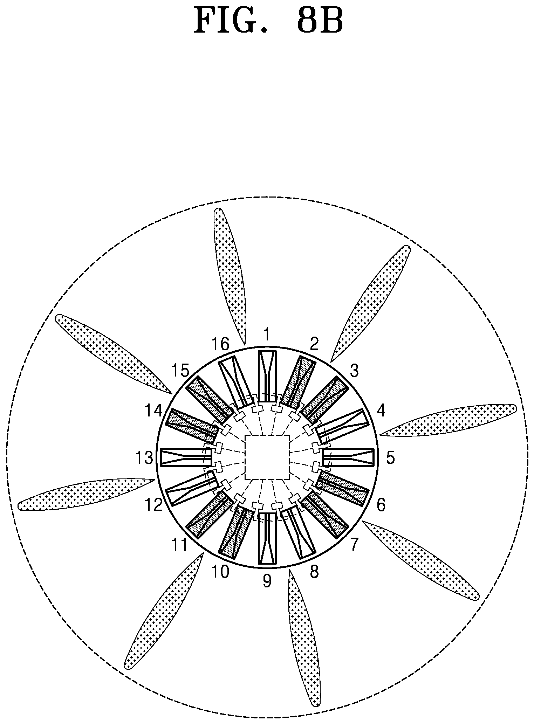

FIGS. 8A and 8B are reference views for describing a method of transmitting and receiving wireless signals of the same phase by grouping two antennas 210, according to an embodiment.

The antennas 210 grouped among the plurality of antennas 210 may be antennas that are continuously arranged. For example, the processor 230 may control a 2n-1^{th} phase shifter 220 and a 2n^{th} phase shifter 220 (n is a natural number) corresponding to an a 2n-1^{th} antenna and a 2n^{th} antenna (n is a natural number) in order to set the 2n-1^{th} antenna and the 2n^{th} antenna (n is a natural number) as grouped antennas for transmitting and receiving wireless signals of the same phase.

As shown in FIG. 8A, a serial number may be applied to each antenna 210. The processor 230 may group the plurality of antennas 210 into (1, 2), (3, 4), (5, 6), (7, 8), (9, 10), (11, 12), (13, 14), and (15, 16). And, the processor 230 may control the plurality of phase shifters 220 to transmit and receive wireless signals of the same phase through the grouped antennas.

Because the plurality of antennas 210 are grouped in units of two antennas, the processor 230 may transmit wireless signals having m/2 or less different traveling directions by using m antennas. Antennas belonging to the same group may transmit and receive wireless signals of the same phase, and antennas belonging to different groups may transmit and receive wireless signals of different phases. For example, wireless signals having 8 different traveling directions may be transmitted by using 16 antennas. A process of transmitting and receiving wireless signals by grouping the antennas 210 in such a manner as in FIG. 8A may be referred to as first set wireless communication.

Because two antennas that are grouped transmit wireless signals of the same phase and the wireless signals are superimposed and propagated, the wireless signals may be propagated farther than when transmitting wireless signals through one antenna.

Alternatively, the processor 230 may control a 2n^{th} phase shifter 220 and a 2n+1^{th} phase shifter 220 (n is a natural number) corresponding to a 2n^{th} antenna and a 2n+1^{th} antenna (n is a natural number) so that the 2n^{th} antenna and the 2n+1^{th} antenna (n is a natural number) transmit and receive wireless signals of the same phase.

For example, as shown in FIG. 8B, the processor 230 may group a plurality of antennas 210 into (2, 3), (4, 5), (6, 7), (8, 9), (10, 11), (12, 13), (14, 15), and (16, 1). And, the processor 230 may control the phase shifters 220 to transmit and receive wireless signals of the same phase through the grouped antennas. The processor 230 may transmit wireless signals having 8 different traveling directions by using 16 antennas 210. A process of transmitting and receiving wireless signals by grouping the antennas 210 in such a manner as in FIG. 8B may be referred to as second set wireless communication.

The processor 230 may transmit and receive wireless signals in 16 different directions by performing the first set wireless communication and the second set wireless communication. Accordingly, the processor 230 may have the same coverage as when one antenna 210 independently transmits and receives a wireless signal, by performing the first set wireless communication and the second set wireless communication.

The processor 230 may perform both the first set wireless communication and the second set wireless communication, or may perform only the first set wireless communication or the second set wireless communication. For example, when wireless communication may be effectively performed only with the first set wireless communication, the processor 230 may perform only the first set communication.

When the number of effective antenna groups is less than the first reference group number, the processor 230 may increase the number of grouped antennas 210. For example, although the plurality of antennas 210 are grouped in units of two antennas to transmit and receive wireless signals, if wireless communication is not effectively performed, the processor 230 may group the plurality of antennas 210 in units of three antennas 210 that are continuously arranged and then may transmit and receive wireless signals of the same phase through the grouped antennas.

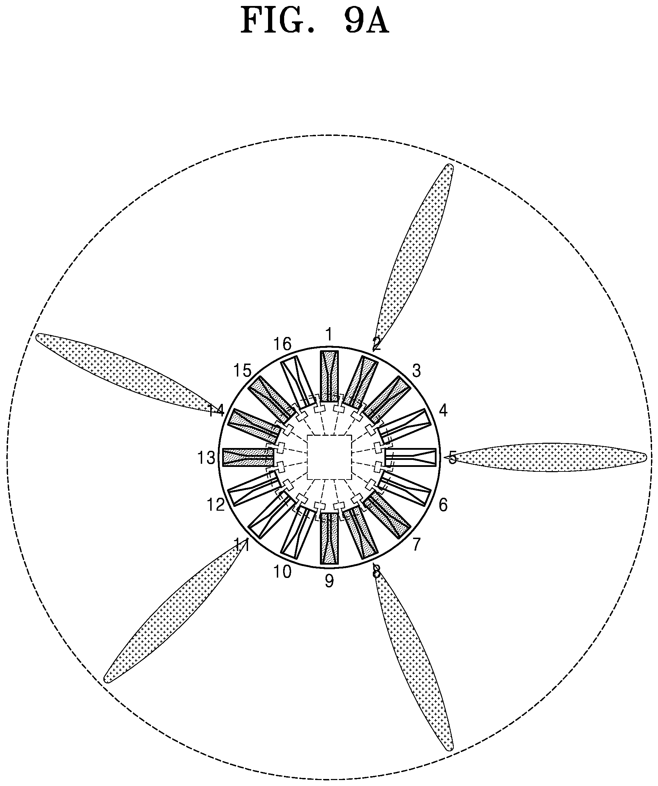

FIGS. 9A to 9C are reference views for describing a method of performing wireless communication by grouping three antennas, according to an embodiment.

The processor 230 may group a 3n-2^{th} antenna, a 3n-1^{th} antenna, and a 3n^{th} antenna that are continuously arranged (n is a natural number), and may control a 3n-2^{th} phase shifter 220, a 3n-1^{th} phase shifter 220, and a 3n^{th} phase shifter 220 (n is a natural number) so that wireless signals of the same phase are transmitted and received through the grouped antennas.

For example, as shown in FIG. 9A, the processor 230 may group the plurality of antennas 210 into (1, 2, 3), (4, 5, 6), (7, 8, 9), (10, 11, 12), and (13, 14, 15). And, the processor 230 may control the plurality of phase shifters 220 to transmit and receive wireless signals of the same phase through the grouped antennas. The processor 230 may transmit and receive wireless signals having m/3 or less different traveling directions by using m antennas 210. For example, the processor 230 may transmit wireless signals having 5 or less different traveling directions by using 16 antennas. A process of transmitting wireless signals by grouping antennas in such a manner as in FIG. 9A may be referred to as first set wireless communication.

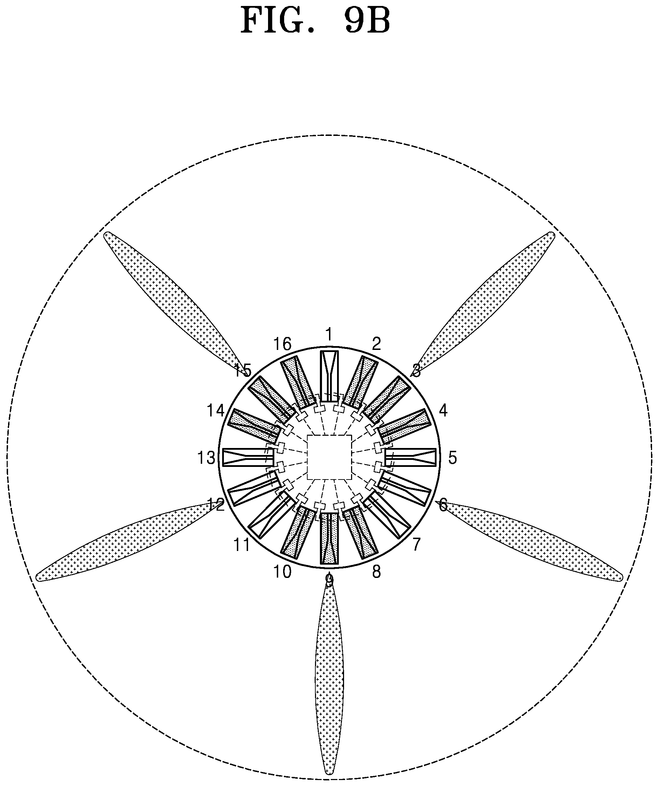

Alternatively, as shown in FIG. 9B, the processor 230 may group the plurality of antennas 210 into (2, 3, 4), (5, 6, 7), (8, 9, 10), (11, 12, 13), and (14, 15, 16). The processor 230 may control the phase shifters 220 to transmit and receive wireless signals of the same phase through the grouped antennas. A process of transmitting and receiving wireless signals by grouping the antennas 210 in such a manner as in FIG. 9B may be referred to as second set wireless communication.

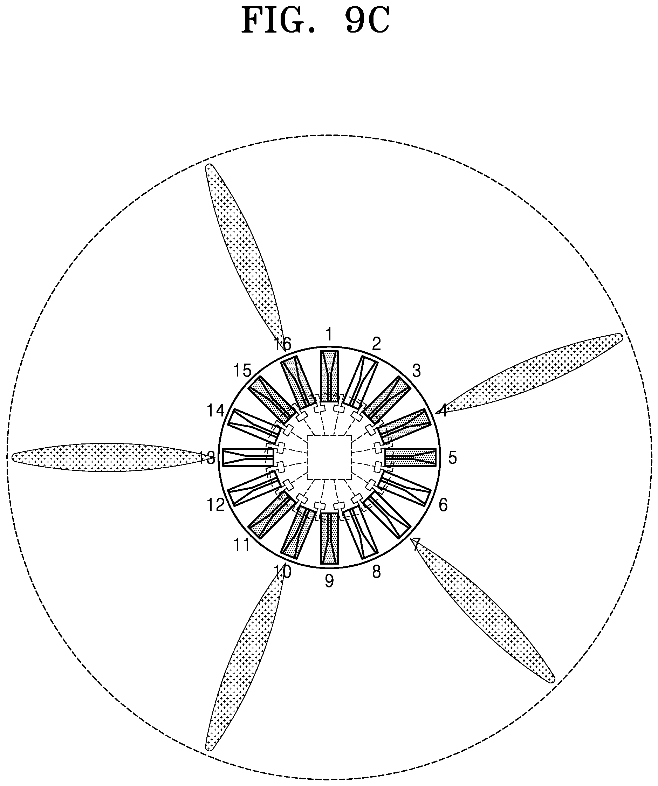

Alternatively, as shown in FIG. 9C, the processor 230 may group the plurality of antennas 210 into (3, 4, 5), (6, 7, 8), (9, 10, 11), (12, 13, 14), and (15, 16, 1). The processor 230 may control the phase shifters 220 to transmit and receive wireless signals of the same phase through the grouped antennas. A process of transmitting wireless signals by grouping the antennas 210 in such a manner as in FIG. 9C may be referred to as third set wireless communication.

When wireless signals are transmitted and received by grouping antennas in units of three antennas, the wireless signals may be propagated farther than when transmitting and receiving wireless signals by grouping antennas in units of two antennas. In order to have a similar range of communication coverage to one antenna, the processor 230 may perform the first to third set wireless communications.

The processor 230 may perform all of the first to third set wireless communications, or may perform only some of the first to third set wireless communications. For example, when wireless communication is effectively performed only with the first set wireless communication and the number of groups is greater than or equal to the first reference group number, the processor 230 may perform only the first set wireless communication.

Also, when the number of effective antenna groups is greater than or equal to the second reference group number, the processor 230 may reduce the number of grouped antennas. For example, antennas grouped in units of three antennas 210 may be grouped in units of two antennas 210.

The antenna device may be provided inside the vehicle, and may include a flexible area in order to be installed along an outer shape of the vehicle.

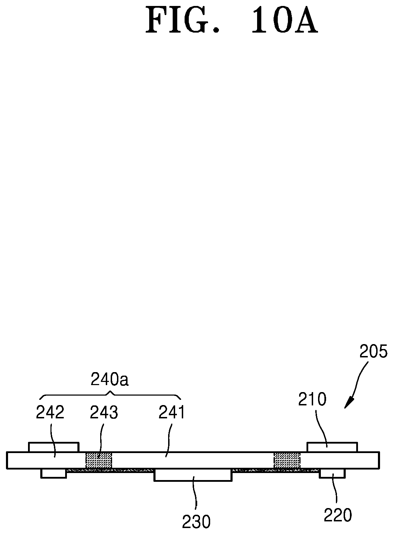

FIG. 10A is a view illustrating an antenna device 205 including an RFPCB, according to an embodiment. Referring to FIG. 10A, a PCB 240a may be referred to as a rigid flexible PCB (hereinafter, referred to as 'RFPCB'). The PCB 240a may include a middle area 241, an edge area 242, and a boundary area 243 connecting the center area 241 to the edge area 242. The antenna 210 and the phase shifter 220 may be disposed in the edge area 242, and the processor 230 may be disposed in the center area 241. The center area 241 and the edge area 242 may be rigid areas, and the boundary area 243 may be a flexible area.

Because the antenna 210, the phase shifter 220, and the processor 230 are disposed on a rigid portion of the PCB 240a, the antenna 210, the phase shifter 220, and the processor 230 may be more stably fixed to the PCB 240a. Because the boundary area 243 between the edge area 242 and the center area 241 is flexible, the antenna device 205 may be easily deformed according to a shape of the vehicle 100 on which the antenna device 205 is mounted.

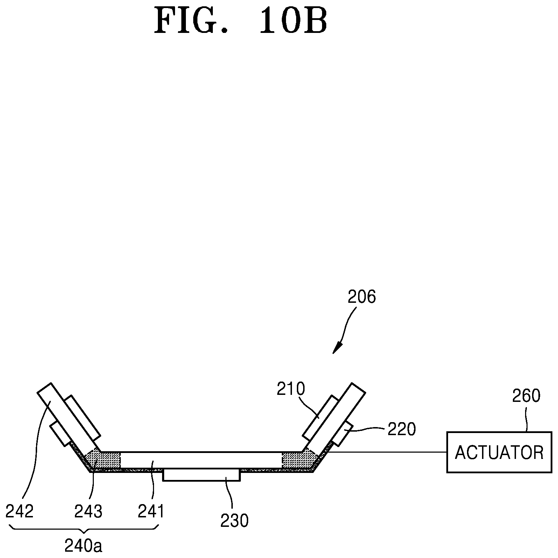

FIG. 10B is a view illustrating an antenna device 206 further including an actuator 260 for adjusting a degree of inclination of the antenna 210, according to an embodiment. As shown in FIG. 10B, the antenna device 206 may further include the actuator 260 for adjusting a degree of inclination of the center area 241 and the edge area 242. The actuator 260 may include a hinge or the like. The actuator 260 may adjust and fix a degree of inclination of the center area 241 and the edge area 242 when the antenna device 206 is installed on the vehicle 100. However, the present disclosure is not limited thereto. A degree of inclination of the center area 241 and the edge area 242 may vary according to a communication state under the control of the processor 230. That is, a shape of the boundary area 243 may be changed.

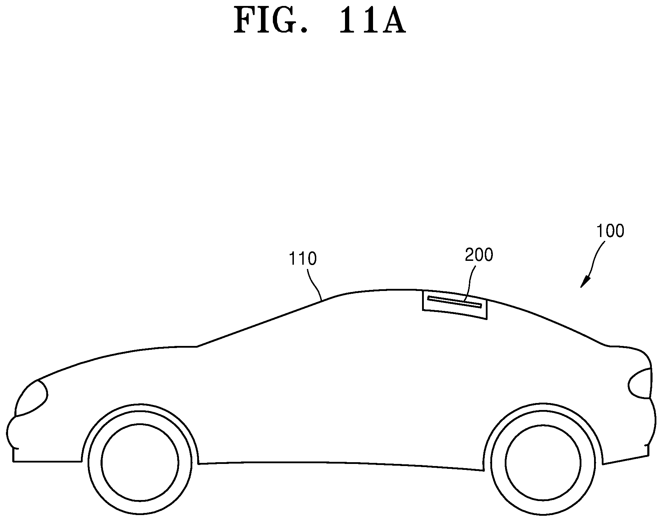

FIGS. 11A to 11D are views illustrating an example of a state where an antenna device is disposed in the vehicle 100.

As shown in FIG. 11A, the antenna device 200 according to an embodiment may be disposed inside the vehicle 100. The antenna device 200 may be disposed in a hole of an upper panel of the vehicle. An antenna may be disposed toward the outside of the vehicle based on a PCB. A phase shifter and a processor may be disposed toward the inside of the vehicle.

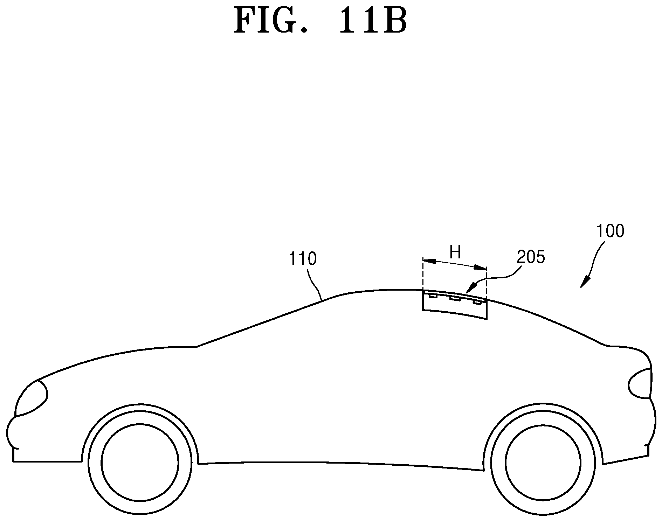

As shown in FIG. 11B, the antenna device 205 according to an embodiment may be integrally disposed with the upper panel 110 of the vehicle 100. Because the boundary area 243 of the PCB 240a is formed in a curved shape corresponding to the upper panel 110 of the antenna device 200, an outer shape of the vehicle is not changed by the antenna device 205.

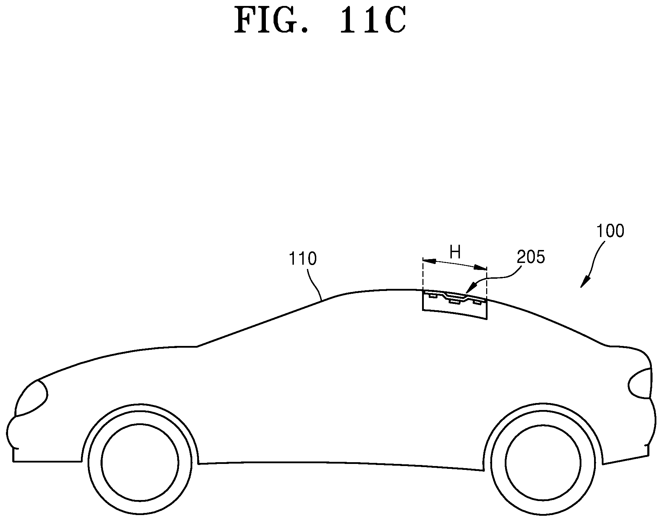

Alternatively, as shown in FIG. 11C, the antenna device 205 according to an embodiment may be mounted in the vehicle 110 so that the edge area 242 of the PCB 240a is disposed to be exposed to the outside of the vehicle 110 and the center area 241 is disposed inside the vehicle 110. Because the antenna device 205 is disposed to be exposed to the outside of the vehicle 110, the communication efficiency of the antenna device 205 may be improved, and because the center area 241 is disposed inside the vehicle 110, the influence of external impact on the processor 230 may be reduced.

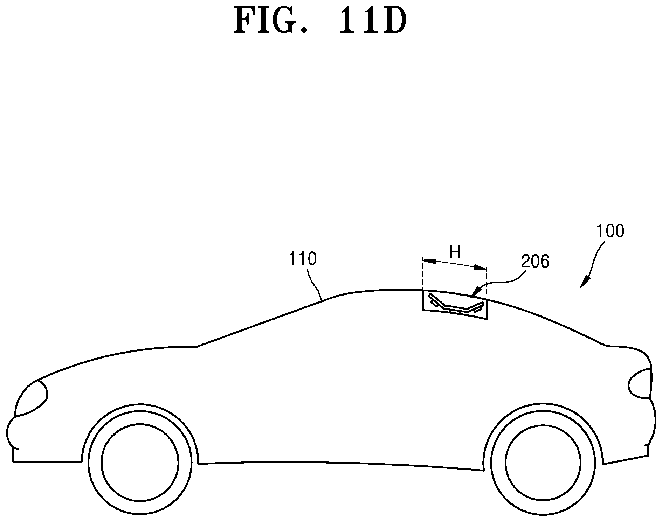

Alternatively, as shown in FIG. 11D, an antenna device 206 may be embedded in the vehicle 110. Because the edge area 242 of the PCB 240a is inclined at a certain angle from the center area 241 to perform beamforming, a volume occupied by the antenna device 200 in the vehicle 110 may be reduced.

A degree of inclination of the center area 241 and the edge area 242 may be fixed or variable.

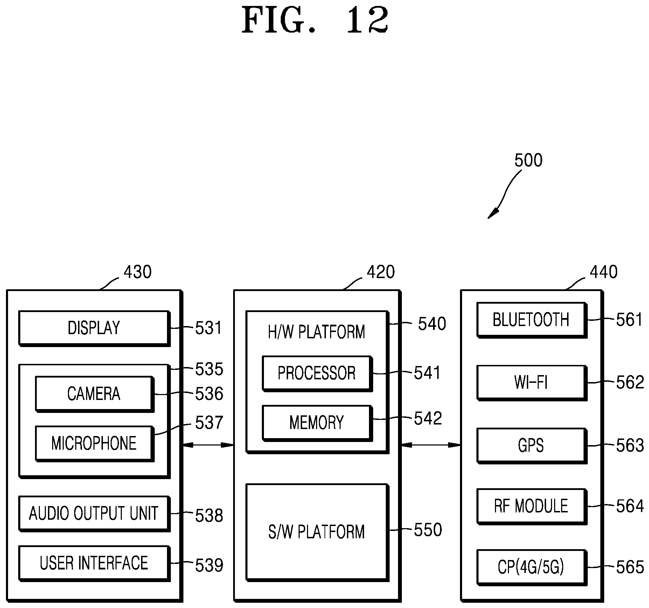

FIG. 12 is a block diagram illustrating a vehicle electronic device including the antenna device 200.

A vehicle electronic device 500 of FIG. 12 may include the vehicle antenna device 200 described with reference to FIG. 2. Also, the vehicle electronic device 500 may refer to a computing device that is installable in the vehicle 100 with which the vehicle antenna device 200 is integrally formed. Hence, when describing the vehicle electronic device 500, the same description as that made for the vehicle antenna device 200 will be omitted.

Referring to FIG. 12, the vehicle electronic device 500 may include a processor 420, an input/output unit 430, and a communication unit 440. In detail, the vehicle electronic device 500 may include the vehicle antenna device 200, and the vehicle antenna device 200 may be integrally formed with the communication unit 440, which is a telematics control unit (TCU) performing communication in the vehicle 100.

Also, the vehicle electronic device 500 may be an electronic device for implementing in-vehicle infotainment (IVI) technology. For example, the vehicle electronic device 500 may provide services, information, and/or content customized to a specific user based on user location information. In detail, the vehicle electronic device 500 may perform communication between the vehicle 100 and an external device to obtain information required to operate or use the vehicle 100. Alternatively, the vehicle electronic device 500 may perform communication between the vehicle 100 and an external device to provide service, information, and/or content to a user.

The processor 420 and the input/output unit 430 included in the vehicle electronic device 500 may be collectively referred to as an IVI head unit. Also, the vehicle electronic device 500 may be disposed in the middle of a central front portion of the vehicle 100 between a driver's seat and a passenger seat. In this case, the antenna 210 included in the vehicle electronic device 500 may be provided to be apart from other components included in the vehicle electronic device 500, and the antenna 210 may be connected to other components of the vehicle electronic device 500 through a wired communication interface such as a wired cable or through a wireless communication interface.

Also, the communication unit 440 may be referred to as a telematics control unit (TCU).

The TCU is a component for controlling data transmission/reception in the vehicle 100 and may be in charge of communication between the vehicle 100 and an external device (e.g., a server or a mobile device).

The processor 420 may include components 541 for implementing a hardware platform (e.g., an application processor (AP) and a memory) and components 550 for implementing a software platform (e.g., an operating system (OS) program, automotive safety software, and an application).

In detail, the components 541 for implementing the hardware platform may include at least one AP 541 and a memory 542. The following will be described assuming that the memory 542 is included in the processor. Also, the memory 420 may be included as a separate component included in the vehicle electronic device 500 rather than being included in the processor.

Also, the components 541 for implementing the hardware platform may further include a universal serial bus (USB) module (not shown) and an FM/DMB tuner (not shown). The USB module (not shown) may read data in an inserted USB, by including a USB insertion portion (not shown). Also, the FM/DMB tuner (not shown) may selectively receive an FM/DMB broadcasting signal. In detail, the FM/DMB tuner (not shown) may tune and select only a frequency of a channel desired to be received by the vehicle electronic device 500 from among a lot of electromagnetic wave components through amplification, mixing, and resonance performed on a wirelessly received broadcasting signal. The broadcasting signal received by the FM/DMB tuner (not shown) may include audio, video, and additional information (e.g., an electronic program guide (EPG)).

The components 550 for implementing the software platform may include an OS program, automotive safety software, and an application. The OS program may include a QNX, Linux, or Android-based OS program.

The input/output unit 430 is a component for providing data to a user or receiving a request of the user and may include at least one of a display 531, a camera module 535, an audio output unit 538, and a user interface 539.

The camera module 535 is a component for obtaining image and/or voice data and may include a camera 536 and a microphone 537. Also, the camera module 535 may include a speaker (not shown) to output an operating sound of the camera 536. Also, when the camera module 535 does not include a separate speaker (not shown), an operating sound of the camera 536 may be output through the audio output unit 538.

For example, the camera module 535 may operate as a detection sensor for recognizing a user's gesture and voice.

In detail, the camera 536 may receive an image (e.g., consecutive frames) corresponding to the user's motion including a gesture within a camera recognition range. For example, the recognition range of the camera 536 may be a distance of 0.1 m to 5 m from the camera 536 to the user. The user's motion may include, for example, the user's face, facial expression, a body part of the user such as a hand, a fist, or a finger, or a motion of a body part of the user. The camera 536 may recognize a received image by converting the received image into an electrical signal under the control of the processor 420, and may select a menu displayed on the vehicle electronic device 500 by using a recognition result corresponding to the user's motion or may perform control corresponding to the motion recognition result. For example, the processor 420 may control channel selection, channel change, volume adjustment, and available service execution in the FM/DMB by using the recognition result obtained by the camera 336.

The camera 536 may be implemented as an integral type with or a separate type from the vehicle electronic device 500. The separate-type camera 536 may be electrically connected to the processor 230 of the vehicle electronic device 500 through the communication unit 440 or the input/output unit 430. For example, when the camera 536 is implemented as a separate type from the vehicle electronic device 500, the camera 536 may be disposed at a position corresponding to a driver's face and front upper body to capture an image of the driver's face and upper body.

The microphone 537 may receive an audio signal such as a voice signal. The microphone 537 may receive the user's voice signal, and the processor 420 may recognize a control command corresponding to the voice received by the microphone 537 and may control a corresponding operation to be executed. Also, the microphone 537 may be included as a separate module in the vehicle electronic device 500, rather than being included in the camera module 535.

The user interface 539 may receive a user input for controlling the vehicle electronic device 500. The user interface 539 may include a push button, a wheel, a keyboard, a jog dial, a touch panel, and a haptic sensor for receiving the user's input.

The communication unit 440 may include at least one antenna device for performing wireless communication. In detail, the communication unit 440 may include at least one of a Bluetooth module 561, a Wi-Fi module 562, a global positioning system (GPS) module 563, an RF module 564, and a communication processor (CP) module 565. The CP module is a modem chipset, and a network may perform communication with an external electronic device through a communication network according to the 3G, 4G, 5G, or 6G communication standard. Also, the communication unit 440 may further include at least one antenna device (not shown) that performs communication according to the communication standard such as Bluetooth low energy (BLE), near-field communication (NFC)/radio frequency identification (RFID), Wi-Fi direct, ultra wideband (UWB), and/or Zigbee.

The antenna device 200 according to an embodiment may be one component of an antenna device included in the communication unit 440. For example, the antenna device 200 according to an embodiment may be included in the CP module 565. An antenna of the antenna device 200 according to an embodiment may be included in the CP module 565, some functions of the processor 230 of the antenna device 200 according to an embodiment may be included in the CP module 565, and the remaining functions of the processor 230 may be included in the processor 420.

Also, components included in the vehicle electronic device 500, for example, the processor 230, the input/output unit 430, and the communication unit 440, may communicate with each other through a vehicle network. Also, the vehicle electronic device 500 and other components included in the vehicle 100 (not shown) may communicate with each other through the vehicle network. The vehicle network may be a network according to a controller area network (CAN) and/or media oriented systems transport (MOST).

The processor 420 may control driving of the vehicle 100 based on information received from the antenna device 200.

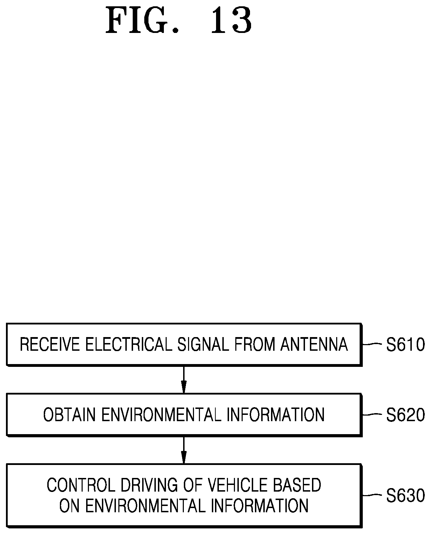

FIG. 13 is a flowchart for describing a method of controlling driving of the vehicle 100 by using the antenna device 200, according to an embodiment. Referring to FIG. 13, the processor 230 may receive an electrical signal from the antenna 210 (S610). The antenna device 200, 201, 202, 203, 204, 205, or 206 may output an electrical signal corresponding to an mmWave wireless signal.

The processor 230 may obtain environmental information from the electrical signal received from the antenna 210 (S620). When the communication module 300 performs communication by using millimeter waves (mmWAVE), the antenna device 200 may rapidly transmit and receive a large amount of data. In detail, because the antenna device 200 rapidly provides data required for the safety of the vehicle 100 (e.g., data required for autonomous driving, data required for a navigation service, and environmental information), content used by a user (e.g., movies and music), etc. to the vehicle 100, the safety of the vehicle 100 and user convenience may be increased. The environmental information may include traffic situation information, weather information, etc. of an adjacent region.

The processor 230 may control driving of the vehicle 100 in response to the environmental information (S630). The processor 230 may control a driver to change at least one of a driving route and a driving speed of the vehicle 100 in response to the environmental information. Although the driver is not shown, the driver may include a steering control unit and a speed control unit. A control manual of the vehicle 100 matched to the environmental information may be prestored in a memory (not shown). The processor 230 may read the control manual of the vehicle 100 matched to the environmental information from the memory and may control driving of the vehicle 100. For example, the processor 230 may control the driver to change a driving speed based on the environmental information such as traffic information of the vehicle 100. However, the present disclosure is not limited thereto. The processor 230 may control driving of the vehicle 100 corresponding to the environmental information by using a learning network model of an artificial intelligence (AI) system. For example, the processor 230 may control driving of the vehicle 100 in order to prevent collision with a vehicle 100 in an accident.

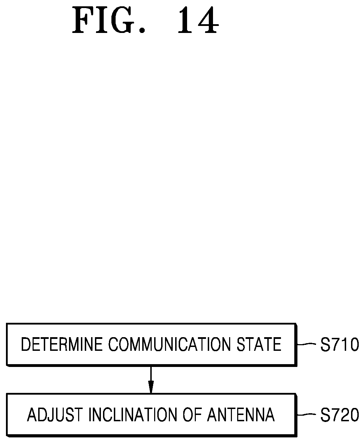

FIG. 14 is a flowchart for describing a method of controlling the antenna device 200 according to a communication state, according to an embodiment. Referring to FIG. 14, the processor 230 may determine a communication state of the antenna device 200 (S710). The processor 230 may supply radiation power to the antenna 210 through a power management module (not shown), and may perform wireless communication with a base station (not shown), which is an external device, through the communication module 200, 201, 202, 203, 204, 205, or 206. The processor 230 may determine whether a communication state (e.g., the quality of a communication signal) is good (e.g., a strong electric field) or poor (e.g., a weak electric field) through the antenna device 210.

The processor 230 may adjust an inclination of the antenna 210 in response to the communication state (S720). For example, when it is determined that the communication state is poor, the processor 230 may adjust, through the actuator 260, an inclination of the antenna 210 with respect to the processor 230 to improve the communication state. The adjustment of the inclination of the antenna may be performed together with grouping of antennas according to a signal gain.

The antenna device 200 installed in a vehicle according to an embodiment may include the printed circuit board 240.

The antenna device 200 may include the plurality of antennas 210 disposed on the printed circuit board 240 and arranged to have 360° coverage.

The antenna device 200 may include the plurality of phase shifters 220 electrically connected to the plurality of antennas 210 in a one-to-one correspondence and each configured to a phase of a wireless signal transmitted through a corresponding antenna 210.

The antenna device 200 may include the processor 230 configured to control at least some of the plurality of phase shifters 220 so that wireless signals of the same phase are transmitted through at least two antennas 210 among the plurality of antennas 210 based on signal gains of wireless signals received through the plurality of antennas 210.

The processor 230 may control the plurality of phase shifters 220 to transmit and receive wireless signals in 360° directions through at least some of the plurality of antennas 210.

When the number of antennas 210 whose signal gain is greater than or equal to a reference value is less than a reference number, the processor 230 may group a plurality of antennas 210 and may control the plurality of phase shifters 220 to transmit and receive wireless signals of the same phase through the grouped antennas 210.

The grouped antennas 210 may be two or more antennas 210 continuously arranged among the plurality of antennas 210.

When the plurality of antennas 210 are grouped in units of n antennas (n is a natural number of 2 or more), the processor 230 may control the plurality of phase shifters 220 to perform n sets of wireless communications.

When the plurality of antennas 210 are grouped in units of two antennas to perform two sets of wireless communications, the antennas 210 included in the same group in a first set of wireless communication may be included in different groups in a second set of wireless communication.

When the number of groups of grouped antennas 210 whose signal gain is greater than or equal to the reference value is less than a first reference group number, the processor 230 may group a plurality of antennas 210 to increase the number of antennas 210 for transmitting wireless signals of the same phase.

The number of grouped antennas 210 may be increased by one.

When the number of groups of grouped antennas 210 whose signal gain is greater than or equal to the reference value is greater than or equal to a second reference group number, the processor 230 may group a plurality of antennas 210 to reduce the number of antennas 210 for transmitting and receiving wireless signals of the same phase.

The plurality of antennas 210 may be arranged to be symmetrical with respect to a central axis of the plurality of antennas 210.

The plurality of antennas 210 may be spaced apart from each other to be rotationally symmetrical with respect to the central axis of the plurality of antennas 210.

The plurality of antennas 210 may be arranged in a ring shape on the printed circuit board 240.

At least one of the plurality of antennas 210 may have a divergence angle greater than or equal to a value obtained by dividing 360° by the number of the plurality of antennas 210.

At least one of the plurality of antennas 210 may be a tapered slot antenna.

The plurality of antennas 210 may be disposed on a first surface of the printed circuit board 240.

The plurality of phase shifters may be disposed on a second surface of the printed circuit board 240 opposite to the first surface.

The printed circuit board 240 may include a center area and an edge area surrounding the center area.

The plurality of antennas 210 may be disposed in the edge area.

The processor 230 may be disposed in the center area.

The vehicle antenna device 200 may further include a plurality of connection wirings connecting the plurality of antennas 210 to the phase shifters 220 corresponding to the plurality of antennas 210 in a one-to-one correspondence.

At least one of the plurality of connection wirings may include a conductive line included in the printed circuit board 240.

The plurality of antennas 210 may transmit and receive wireless signals of an mmWave band.

An operating method of a device of the vehicle antenna 210 including the plurality of antennas 210 arranged to have 360° coverage may include calculating a signal gain of a wireless signal received through each of the plurality of antennas 210.

The operating method of the device of the vehicle antenna 210 may include transmitting wireless signals of the same phase through at least two antennas 210 among the plurality of antennas 210 based on the signal gain of the wireless signal.

Although embodiments have been described in detail above, the scope of the present disclosure is not limited thereto, and various modifications and improvements made by one of ordinary skill in the art by using the basic concept of the present disclosure defined by the claims are also within the scope of the present disclosure.

## Claims

1. A vehicle antenna device installed on a vehicle, the vehicle antenna device comprising:
a printed circuit board (240);
a plurality of antennas (210) disposed on the printed circuit board (240) and arranged to have 360° coverage;
a plurality of phase shifters (220) electrically connected to the plurality of antennas (210) in a one-to-one correspondence and each configured to control a phase of a wireless signal transmitted through a corresponding antenna (210); and
a processor (230) configured to control at least some of the plurality of phase shifters (220) so that wireless signals of a same phase are transmitted through at least two antennas (210) among the plurality of antennas (210) based on signal gains of wireless signals received through the plurality of antennas (210).

2. The vehicle antenna device of claim 1, wherein the processor (230) is further configured to control the plurality of phase shifters (220) to transmit and receive wireless signals in 360° directions through at least some of the plurality of antennas (210).

3. The vehicle antenna device of claim 1, wherein the processor (230) is further configured to, when a number of antennas (210) whose signal gain is greater than or equal to a reference value is less than a reference number, group a plurality of antennas (210) and control the plurality of phase shifter (220) to transmit and receive wireless signals of a same phase through the grouped antennas (210).

4. The vehicle antenna device of claim 3, wherein the grouped antennas are two or more antennas (210) continuously arranged among the plurality of antennas (210).

5. The vehicle antenna device of claim 3, wherein the processor (230) is further configured to, when the plurality of antennas (210) are grouped in units of n antennas (n is a natural number of 2 or more), control the plurality of phase shifters (220) to perform n sets of wireless communications.

6. The vehicle antenna device of claim 3, wherein the processor (230) is further configured to, when a number of groups of grouped antennas (210) whose signal gain is greater than or equal to the reference value is less than a first reference group number, group a plurality of antennas (210) to increase a number of antennas (210) for transmitting wireless signals of a same phase.

7. The vehicle antenna device of claim 3, wherein the processor (230) is further configured to, when a number of groups of grouped antennas (210) whose signal gain is greater than or equal to the reference value is greater than or equal to a second reference group number, group a plurality of antennas (210) to reduce a number of antennas (210) for transmitting and receiving wireless signals of a same phase.

8. The vehicle antenna device of claim 1, wherein the plurality of antennas (210) are arranged to be symmetrical with respect to a center axis of the plurality of antennas (210).

9. The vehicle antenna device of claim 1, wherein the plurality of antennas (210) are arranged in a ring shape on the printed circuit board (240).

10. The vehicle antenna device of claim 1, wherein at least one of the plurality of antennas (210) has a divergence angle greater than or equal to a value obtained by dividing 360° by a number of the plurality of antennas (210).

11. The vehicle antenna device of claim 1, wherein the plurality of antennas (210) are disposed on a first surface of the printed circuit board (240), and the plurality of phase shifters are disposed on a second surface of the printed circuit board (240) opposite to the first surface.

12. The vehicle antenna device of claim 1, wherein the printed circuit board (240) comprises a center area and an edge area surrounding the center area, wherein the plurality of antennas (210) are disposed in the edge area, and the processor (230) is disposed in the center area.

13. The vehicle antenna device of claim 1, further comprising a plurality of connection wirings connecting the plurality of antennas (210) to the phase shifters (220) corresponding to the plurality of antennas (210) in a one-to-one correspondence.

14. The vehicle antenna device of claim 13, wherein at least one of the plurality of connection wirings comprises a conductive line included in the printed circuit board (240).

15. An operating method of a vehicle antenna device comprising a plurality of antennas (210) arranged to have 360° coverage, the operating method comprising:
calculating a signal gain of a wireless signal received through each of the plurality of antennas (210); and
transmitting wireless signals of a same phase through at least two antennas (210) among the plurality of antennas (210) based on the signal gain of the wireless signal.
